# EUROPÄISCHE PATENTSCHRIFT

(11) **EP 2 118 172 B1**
(45) Veröffentlichungstag und Bekanntmachung des Hinweises auf die Patenterteilung: **04.08.2010**
(21) Anmeldenummer: 08717568.3
(22) Anmeldetag: 10.03.2008
(51) Int. Cl.: C08G 71/04, C14C 3/18

(54) **VERFAHREN ZUR HERSTELLUNG VON PRODUKTEN AUF BASIS VON CYCLISCHEN ORGANISCHEN CARBONATEN**
METHOD FOR THE PRODUCTION OF PRODUCTS BASED ON CYCLIC ORGANIC CARBONATES
PROCÉDÉ DE FABRICATION DE PRODUITS À BASE DE CARBONATES ORGANIQUES CYCLIQUES

(30) Priorität: 12.03.2007 DE 102007012229
(43) Veröffentlichungstag der Anmeldung: 18.11.2009
(73) Patentinhaber: BASF SE, 67056 Ludwigshafen (DE)
(72) Erfinder: MAHN, Ulrike, 68165 Mannheim (DE); GARNIER, Sebastien, 69469 Weinheim (DE); GEHRINGER, Lionel, F-67630 Scheibenhard (FR); HÜFFER, Stephan, 67063 Ludwigshafen (DE); VORWALD, Markus, 68199 Mannheim (DE)
(86) Internationale Anmeldenummer: PCT/EP2008/052821
(87) Internationale Veröffentlichungsnummer: WO 2008/110532

(56) Entgegenhaltungen:
- EP-A- 0 280 815
- EP-A- 0 549 574
- DE-A1-102005 008 034
- US-A- 5 059 723

## Beschreibung

Die vorliegende Erfindung betrifft ein Verfahren zur Herstellung von Produkten, erhältlich durch Umsetzung von
(A) mindestens einem cyclischen organischen Carbonat mit
(B) mindestens einer Verbindung mit mindestens zwei nucleophilen Gruppen pro Molekül, gewählt aus Sulfonsäure-, Hydroxyl-, Mercapto- und primären oder sekundären Amino-gruppen,
bei Reaktionstemperaturen im Bereich von 150 bis 220 °C, dadurch gekennzeichnet, dass man zunächst auf eine Temperatur im Bereich von 100 bis 145°C aufheizt und danach mit einer Aufheizgeschwindigkeit im Bereich von 1 bis 85°C/Stunde auf die Reaktionstemperatur aufheizt.

Die nach dem erfindungsgemäßen Verfahren erhältlichen Produkte kann man beispielsweise als Gerbmittel oder Nachgerbmittel einsetzen.

Zahlreiche handelsübliche Harzgerbstoffe sind Kondensationsprodukte aus einem oder mehreren Aldehyden wie beispielsweise Formaldehyd und einer oder mehreren Stickstoffverbindungen wie beispielsweise Melamin. Derartige Harzgerbstoffe liefern zwar in vielen Fällen Leder mit einer guten Fülle, Weichheit und Intensität der Färbung sind aber im allgemeinen nicht gut genug. Außerdem sondern derartige Leder im Allgemeinen Aldehyd, in den meisten Beispielen Formaldehyd ab, was aus toxikologischen Gründen unerwünscht ist.

In der unveröffentlichten Patentanmeldung DE 10 2005 050 193.1 wird vorgeschlagen, solche Produkte einzusetzen, die man durch Umsetzung von cyclischen organischen Carbonaten wie beispielsweise Ethylencarbonat mit mindestens einer Verbindung mit mindestens zwei nucleophilen Gruppen pro Molekül, gewählt aus Sulfonsäuregruppen, Hydroxylgruppen, primären oder sekundären Amingruppen oder Mercaptogruppen erhalten kann. Man beobachtet jedoch, dass in vielen Fällen eine starke Schaumbildung auftritt, die der Reaktionsführung im größeren Maßstab erheblich erschweren kann. Schließlich beobachtet man in einigen Fällen, dass unlösliche Bestandteile übrig bleiben, die beim Gerben oder Nachgerben von Häuten nachteilig sind.

Es bestand also die Aufgabe, ein Verfahren bereit zu stellen, durch das sich die vorstehend genannten Produkte unter Vermeidung der genannten Nachteile herstellen lassen.

Dementsprechend wurde das eingangs definierte Verfahren gefunden.

Zur Ausübung des erfindungsgemäßen Verfahrens setzt man um:
(A) mindestens ein cyclisches organisches Carbonat mit
(B) mindestens einer Verbindung mit mindestens zwei nucleophilen Gruppen pro Molekül, gewählt aus Sulfonsäure-, Hydroxyl-, Mercapto- und primären oder sekundären Amino-gruppen.

Unter cyclischen organischen Carbonaten (A) versteht man im Rahmen der vorliegenden Erfindung organische Kohlensäureester, die mindestens eine cyclische Gruppe aufweisen. Bevorzugt handelt es sich bei cyclischen organischen Carbonaten um solche organischen Kohlensäureester, bei denen die Kohlensäureestergruppe Bestandteil eines cyclischen Systems ist.

In einer Ausführungsform der vorliegenden Erfindung wählt man cyclisches organisches Carbonat (A) aus Verbindungen der allgemeinen Formel I 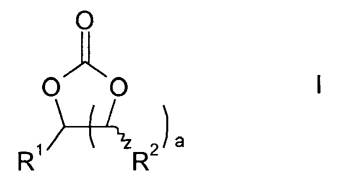 wobei die Variablen wie folgt definiert sind:
- R¹: gewählt aus C₁-C₄-Alkyl, verzweigt oder vorzugsweise linear, beispielsweise Me- thyl, Ethyl, n-Propyl, iso-Propyl, n-Butyl, iso-Butyl, sec-Butyl, tert.-Butyl, ganz be- vorzugt Methyl und Ethyl, und ganz besonders bevorzugt Wasserstoff,
- R²: gegebenenfalls verschieden oder vorzugsweise gleich und unabhängig vonein- ander gewählt aus Wasserstoff und C₁-C₄-Alkyl, verzweigt oder vorzugsweise li- near, beispielsweise Methyl, Ethyl, n-Propyl, iso-Propyl, n-Butyl, iso-Butyl, sec- Butyl, tert.-Butyl, ganz bevorzugt Methyl und Ethyl, und ganz besonders bevor- zugt jeweils gleich und Wasserstoff,
- a: eine ganze Zahl im Bereich von 1 bis 3, bevorzugt 2 und besonders bevorzugt 1.

Besonders bevorzugte cyclische organische Carbonate (A) sind Propylencarbonat, Ethylencarbonat und Mischungen von Propylencarbonat (R¹ = Methyl, R² = Wasserstoff, a = 1) und Ethylencarbonat (R¹ = R² = Wasserstoff, a = 1), insbesondere bei Zimmertemperatur flüssige Mischungen von Propylencarbonat und Ethylencarbonat.

Unter Verbindungen (B) mit mindestens zwei nucleophilen Gruppen pro Molekül, gewählt aus Sulfonsäure-, Hydroxyl-, Mercapto- und primären oder sekundären Aminogruppen, im Rahmen der vorliegenden Erfindung auch kurz als Verbindungen (B) bezeichnet, werden solche Verbindungen verstanden, die zwei zu nucleophilen Reaktionen befähigte Gruppen wie beispielsweise Sulfonsäuregruppen, Hydroxylgruppen, Mercaptogruppen oder primäre oder sekundäre Aminogruppen aufweisen.

Beispiele für geeignete Verbindungen (B) können aufweisen:
mindestens zwei nucleophile Hydroxylgruppen pro Molekül,
mindestens zwei nucleophile Mercaptogruppen pro Molekül,
mindestens zwei nucleophile primäre oder sekundäre Aminogruppen pro Molekül, beispielsweise zwei oder drei nucleophile primäre oder sekundäre Aminogruppen pro Molekül,
mindestens eine nucleophile Hydroxylgruppe oder Mercaptogruppe und mindestens eine nucleophile primäre oder sekundäre Aminogruppe pro Molekül oder mindestens eine nucleophile Hydroxylgruppe und mindestens eine nucleophile Mercaptogruppe pro Molekül,
mindestens eine nucleophile Hydroxylgruppe oder primäre oder sekundäre Aminogruppe und eine Sulfonsäuregruppe pro Molekül.

Schwefelsäure ist keine Verbindung (B) im Sinne der vorliegenden Erfindung.

Beispiele für nucleophile Hydroxylgruppen sind OH-Gruppen von primären und sekundären Alkoholen und insbesondere phenolische OH-Gruppen.

Beispiele für nucleophile Mercaptogruppen sind SH-Gruppen, aliphatisch oder aromatisch.

Beispiele für nucleophile Aminogruppen sind -NHR³-Gruppen, aliphatisch oder aromatisch, wobei R³ gewählt wird aus Wasserstoff, C₁-C₄-Alkyl, wie vorstehend definiert, und CN, oder die NH₂-Gruppe von beispielsweise Amidosulfonsäure.

OH-Gruppen und NH-Gruppen, die Bestandteile von Aminalgruppen, Halbaminalgruppen oder Hydratgruppen von Ketonen oder Aldehyden sind, sind keine nucleophilen Hydroxylgruppen bzw. Aminogruppen im Sinne der vorliegenden Erfindung. Auch OH-Gruppen und NH-Gruppen, die Bestandteile von Carbonsäuregruppen oder Carbonsäureamidgruppen sind, sind keine nucleophilen Hydroxylgruppen bzw. Aminogruppen im Sinne der vorliegenden Erfindung.

Bevorzugte Beispiele für Verbindungen (B) sind
Harnstoffe, unsubstituiert oder ein- oder zweifach N,N'-substituiert mit C₁-C₄-Alkyl , Biuret, insbesondere unsubstituierter Harnstoff (B1), heterocyclische Verbindungen mit mindestens zwei NH₂-Gruppen pro Molekül (B2), beispielsweise Adenin und insbesondere Melamin,
Benzoguanamin,
Dicyandiamid (B3), Guanidin (B4),
Verbindungen der allgemeinen Formel II 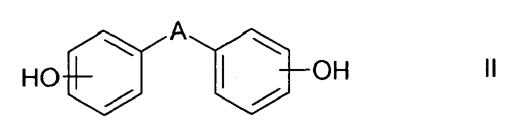 in denen A eine bivalente Gruppe bedeutet, beispielsweise -CH₂-, -CH₂CH₂-, -CH(CH₃)-, -C(CH₃)₂-, -CO-, -SO₂-, bevorzugt 4,4'-Dihydroxybiphenyl, 2,4'-Dihydroxydiphenylsulfon, besonders bevorzugt 4,4'-Dihydroxydiphenylsulfon (B5), Mischungen von 4,4'-Dihydroxydiphenylsulfon und 2,4'-Dihydroxydiphenylsulfon, beispielsweise in einem Gewichtsverhältnis von 8 : 1 bis 8 : 1,5, sowie Bisphenol A (B6). Weitere bevorzugte.Beispiele für Verbindung (B) sind 4-Hydroxyphenylsulfonsäure (B7) und Amidosulfonsäure (B8).

Ganz besonders bevorzugte Verbindungen (B) sind Harnstoff und Melamin.

In einer Ausführungsform der vorliegenden Erfindung setzt man cyclisches organisches Carbonat (A) mit Verbindung (B) in einem Molverhältnis im Bereich von 2 : 1 bis 100 : 1, bevorzugt 5 : 1 bis 20 : 1 um.

Zur Durchführung des erfindungsgemäßen Verfahrens setzt man cyclisches organisches Carbonat (A) mit Verbindung (B) bei Reaktionstemperaturen im Bereich von 150 bis 220°C, bevorzugt 160 bis 200°C um, indem man zunächst auf eine Temperatur im Bereich von 100 bis 145°C, bevorzugt 110 bis 135°C aufheizt (Heizintervall 1) und danach mit einer Aufheizgeschwindigkeit im Bereich von 1 bis 85°C/Stunde, bevorzugt im Bereich von 5 bis 40°C/Stunde, besonders bevorzugt im Bereich von 10 bis 30°C/Stunde auf die Reaktionstemperatur von 150 bis 220°C, bevorzugt 160 bis 200°C aufheizt (Heizintervall 2).

Die Aufheizdauer in Heizintervall 1 kann beispielsweise 10 bis 400 Minuten, bevorzugt 25 bis 120 Minuten betragen.

Die Aufheizgeschwindigkeit in Heizintervall 1 ist vorzugsweise größer als die Aufheizgeschwindigkeit in Heizintervall 2.

Man wählt also zwei verschiedene Aufheizgeschwindigkeiten, und zwar eine Aufheizgeschwindigkeit in Heizintervall 1 und eine andere, vorzugsweise geringere Aufheizgeschwindigkeit in Heizintervall 2.

Nach Beendigung von Heizintervall 1 beobachtet man in vielen Fällen ein "Anspringen" der Reaktion.

Nach Beendigung von Heizintervall 1 kann man zunächst die Temperatur eine Zeit lang, beispielsweise 5 Minuten bis 2 Stunden, bei der erreichten Temperatur halten und danach mit dem Heizen gemäß Heizintervall 2 beginnen. In einer anderen Variante kann man nach Beendigung von Heizintervall 1 unmittelbar mit dem Heizen gemäß Heizintervall 2 beginnen.

Dabei kann man cyclisches organisches Carbonat (A) mit Verbindung (B) vermischen, die vorzugsweise beide Zimmertemperatur haben, und danach mit dem Aufheizen beginnen. Natürlich ist es auch möglich, die Reaktionspartner cyclisches organisches Carbonat (A) mit Verbindung (B) zu vermischen, wobei einer der Reaktionspartner Zimmertemperatur aufweist und der andere nicht, beispielsweise bis zu 80°C oder bis zu 50°C, und danach mit dem Aufheizen beginnen. Auch ist es möglich, beide Reaktionspartner in vorgewärmtem Zustand zu vermischen und dann aufzuheizen. Wenn die Reaktionsmischung bereits eine Temperatur oberhalb von Zimmertemperatur aufweist, so verkürzt sich Heizintervall 1 entsprechend.

In einer Ausführungsform der vorliegenden Erfindung setzt man cyclisches organisches Carbonat (A) mit Verbindung (B) in Gegenwart von Base um. Als Base sind beispielsweise basische Erdalkali- oder Alkalimetallsalze geeignet, z. B. Hydroxide und Carbonate von Natrium oder Kalium, weiterhin Amine, insbesondere tertiäre Amine wie beispielsweise Pyridin, Tri-C₁-C₄-Alkylamin wie beispielsweise Trimethylamin, Triethylamin, Isopropyldiethylamin und bicyclische Amine wie beispielsweise 1,4-Diaza-bicyclo[2,2,2]oktan. Man kann beispielsweise katalytische Mengen an Base einsetzen, z. B. 0,001 bis 10 mol-% Base, bezogen auf Verbindung (B). In einer anderen Ausführungsform der vorliegenden Erfindung setzt man cyclisches organisches Carbonat (A) mit Verbindung (B) in Abwesenheit von Base um.

Man kann cyclisches organisches Carbonat (A) mit Verbindung (B) bei beliebigem Druck umsetzen, beispielsweise 0,1 bar bis 10 bar. Bevorzugt setzt man cyclisches organisches Carbonat (A) mit Verbindung (B) bei Normaldruck um.

In einer Ausführungsform der vorliegenden Erfindung setzt man cyclisches organisches Carbonat (A) mit Verbindung (B) über einen Zeitraum von 5 Minuten bis 24 Stunden um. Man beobachtet bei der Umsetzung von cyclischem organischem Carbonat (A) mit Verbindung (B) im Allgemeinen eine Gasentwicklung in Form beispielsweise eines Schäumens oder Sprudelns. In einer Ausführungsform der vorliegenden Erfindung bricht man die Umsetzung von cyclischem organischem Carbonat (A) mit Verbindung (B) ab, wenn keine Gasentwicklung mehr zu beobachten ist.

In einer Ausführungsform der vorliegenden Erfindung kann man nach beendeter Umsetzung neutralisieren, beispielsweise mit Mineralsäure wie z. B. Schwefelsäure. Geeignete pH-Werte für die Neutralisation können im Bereich von 4,5 bis 7 liegen.

In einer Ausführungsform der vorliegenden Erfindung kann man Produkt, erhalten durch Umsetzung von cyclischem organischem Carbonat (A) mit Verbindung (B), nach erfolgter Umsetzung und gegebenenfalls Neutralisation aufreinigen, beispielsweise kann man durch Extraktion oder Ultrafiltration anorganische Salze abtrennen.

In einer Ausführungsform der vorliegenden Erfindung führt man die Umsetzung von cyclischem organischem Carbonat (A) mit Verbindung (B) in Gegenwart von mindestens einem Phenol, unsubstituiert oder ein oder mehrfach substituiert mit SO₃H, durch.

In einer Ausführungsform der vorliegenden Erfindung verzichtet man auf die Aufreinigung von Produkt, erhalten durch Umsetzung von cyclischem organischem Carbonat (A) mit Verbindung (B) und gegebenenfalls Neutralisation.

In einer Ausführungsform der vorliegenden Erfindung kann man Produkt, erhalten durch Umsetzung von cyclischem organischem Carbonat (A) mit Verbindung (B) und gegebenenfalls Neutralisation, trocknen, beispielsweise durch Eindampfen und bevorzugt durch Sprühtrocknen. Man erhält dann ein Pulver.

Durch die vorstehend beschriebene Fahrweise kann man erreichen, dass die maximale Gasentwicklungsgeschwindigkeit 8 l/min·kg Reaktionsmischung nicht überschreitet, wobei die Gasmenge auf Raumtemperatur bezogen ist. Die Bildung eines Schaums kann somit vermieden werden.

In einer Ausführungsform der vorliegenden Erfindung kann man so vorgehen, dass man die gesamte Einsatzmenge an cyclischem organischem Carbonat (A) und Verbindung (B) miteinander vermischt und danach mit dem Aufheizen beginnt.

In einer anderen Ausführungsform der vorliegenden Erfindung dosiert man Verbindung (B) in einer oder mehreren Portionen. Dazu kann man einen Anteil der einzusetzenden Verbindung (B) zusammen mit cyclischem organischem Carbonat (A) vorlegen und den Rest an Verbindung (B) in einer oder mehreren Portionen während des Aufheizens zusetzen oder den Rest an Verbindung (B) kontinuierlich zudosieren.

In einer anderen Ausführungsform der vorliegenden Erfindung dosiert man cyclisches organisches Carbonat (A) in einer oder vorzugsweise mehr Portionen. Dazu kann man einen Anteil des einzusetzenden cyclischen organischen Carbonats (A) zusammen mit Verbindung (B) vorlegen und den Rest an cyclischem organischem Carbonat (A) in einer oder mehreren Portionen während des Aufheizens zusetzen. In einer anderen Variante kann man einen Anteil des einzusetzenden cyclischen organischen Carbonats (A) zusammen mit Verbindung (B) vorlegen und den Rest an cyclischem organischem Carbonat (A) kontinuierlich zulaufen lassen. In einer anderen Variante kann man einen Anteil des einzusetzenden cyclischen organischen Carbonats (A) zusammen mit einem Teil von Verbindung (B) vorlegen und den Rest an cyclischem organischem Carbonat (A) und Verbindung (B) kontinuierlich zulaufen lassen.

Man kann die erfindungsgemäße Umsetzung von cyclischem organischem Carbonat (A) und Verbindung (B) in beliebigen Reaktionsgefäßen durchführen, beispielsweise in einem Rührkessel oder einer Kaskade aus zwei oder mehr Rührkesseln. In einer speziellen Ausführungsform der vorliegenden Erfindung führt man die erfindungsgemäße Umsetzung von cyclischem organischem Carbonat (A) und Verbindung (B) in einem Reaktionsgefäß durch, das eine oder mehrere Einbauten aufweist, die zur Entschäumung dienen, beispielsweise einen speziellen Rührer wie beispielsweise einen mehrstufigen Kreuzbalkenrührer, oder einen oder mehrere rotierende Einbauten oder eine Ultraschallquelle oder einen Zyklon.

In einer Ausführungsform der vorliegenden Erfindung kann man die erfindungsgemäße Umsetzung in Abwesenheit von Entschäumungsmitteln durchführen. In einer anderen Ausführungsform der vorliegenden Erfindung kann man die erfindungsgemäße Umsetzung von cyclischem organischem Carbonat (A) und Verbindung (B) in Anwesenheit von einem oder mehreren Entschäumungsmitteln durchführen, beispielsweise Polysiloxanen, insbesondere bei Zimmertemperatur flüssigen Polydimethylsiloxanen, nicht ethoxyliert oder 2-fach bis 10-fach ethoxyliert. Andere geeignete Entschäumungsmittel sind mehrfach alkoxylierte Fettsäuren, insbesondere 3 bis 50-fach ethoxylierte C₁₀-C₂₀-Fettsäuren, ungesättigt oder gesättigt. Andere geeignete Entschäumungsmittel sind Paraffine, vorzugsweise C₁₆-C₅₀-Paraffine. Andere geeignete Entschäumungsmittel sind C₁₀-C₂₀-Alkanole, vorzugsweise unverzweigte primäre C₁₀-C₂₀-Alkanole, nicht alkoxyliert oder drei- bis 75-fach alkoxyliert, insbesondere ethoxyliert.

Im Anschluss an die Durchführung des erfindungsgemäßen Verfahrens kann man Produkt, erhalten durch Umsetzung von cyclischem organischem Carbonat (A) mit Verbindung (B), neutralisieren. Man kann Produkt, erhalten durch Umsetzung von cyclischem organischem Carbonat (A) mit Verbindung (B) und gegebenenfalls Neutralisation, als wässrige Formulierung einsetzen. In einer anderen Ausführungsform der vorliegenden Erfindung trocknet man Produkt, erhalten durch Umsetzung von cyclischem organischem Carbonat (A) mit Verbindung (B) und gegebenenfalls Neutralisation, beispielsweise in einem Sprühtrockner.

Durch die Ausführung des erfindungsgemäßen Verfahrens erhält man klare, homogen aussehende Produkte, die vorzugsweise eine OH-Zahl von mindestens 390 mg KOH/g aufweisen, bestimmt nach DIN 53240-2. Durch die Ausführung des erfindungsgemäßen Verfahrens erhält man Produkte, die außerdem keine Rückstände von Ausgangsmaterialien, insbesondere von Verbindung (B) aufweisen. Durch die Ausführung des erfindungsgemäßen Verfahrens erhält man Produkte, die außerdem gut, d.h. ohne Rückstände, wasserlöslich sind.

In einer Ausführungsform der vorliegenden Erfindung haben erfindungsgemäß hergestellte Produkte ein mittleres Molekulargewicht M_{w} im Bereich von 250 bis 1.000.000 g/mol, bevorzugt 300 bis 100.000 g/mol, besonders bevorzugt 500 bis 10.000 g/mol und ganz besonders bevorzugt bis 5.000 g/mol.

In einer Ausführungsform der vorliegenden Erfindung haben erfindungsgemäß hergestellte Produkte eine enge Molekulargewichtsverteilung, beispielsweise kann der Quotient M_{w}/Mₙ im Bereich von 1,6 bis 3, bevorzugt bis 2,6 liegen.

Die erfindungsgemäß hergestellten Produkte eignen sich besonders gut zum Gerben oder Nachgerben von Häuten toter Tiere, entweder alleine oder in Kombination mit Chromgerbstoffen, mineralischen Gerbstoffen, Polymergerbstoffen, Aldehyden oder Syntanen.

Die Erfindung wird durch Arbeitsbeispiele erläutert.

### I. Herstellung von erfindungsgemäßen Produkten und Vergleichsgerbmitteln

Der Feststoffgehalt wurde durch Verdampfen der flüchtigen Bestandteile bestimmt. Die OH-Zahl (Hydroxylzahl) wurde jeweils nach DIN 53240-2 bestimmt. Die Gasentwicklungsgeschwindigkeit bezieht sich stets auf Liter bei Zimmertemperatur und Normaldruck.

### l.1. Herstellung von erfindungsgemäß hergestelltem Produkt P1

Man legte 50,4 g (0,4 mol) Melamin, 440 g (5 mol) Ethylencarbonat und 0,4 g (3,2 mmol) Kaliumcarbonat in einem 1000-ml-Kolben vor und erhitzte unter Rühren innerhalb von 35 Minuten auf 130°C. Danach erhitzte man mit einer Aufheizgeschwindigkeit von 8°C/h auf 170°C. Die maximale Gasentwicklungsgeschwindigkeit betrug 1,7 l /min·kg Reaktionsmischung, und es wurde kein Schaum beobachtet. Die so erhaltene Reaktionsmischung wurde so lange bei 170°C gerührt, bis keine Gasentwicklung mehr zu beobachten war. Anschließend wurde auf Raumtemperatur abgekühlt. Man erhielt ein erfindungsgemäß hergestelltes Produkt P1 mit einer Hydroxylzahl von 477 mg KOH/g. Eine 70 Gew.-% wässrige Lösung sah homogen und klar aus.

### l.2. Herstellung von erfindungsgemäß hergestelltem Produkt P2

Man legte 100,8 g (0,8 mol) Melamin, 880 g (10 mol) Ethylencarbonat und 0,80 g (6,4 mmol) Kaliumcarbonat in einem 2-l-Kolben vor und erhitzte unter Rühren innerhalb von 30 Minuten auf 130°C. Danach erhitzte man mit einer Aufheizgeschwindigkeit von 70°C/h auf 170°C. Die maximale Gasentwicklungsgeschwindigkeit betrug 8 l /min·kg Reaktionsmischung, und es wurde kein Schaum beobachtet. Die so erhaltene Reaktionsmischung wurde so lange bei 170°C gerührt, bis keine Gasentwicklung mehr zu beobachten war. Anschließend wurde auf Raumtemperatur abgekühlt. Man erhielt ein erfindungsgemäß hergestelltes Produkt P2 mit einer Hydroxylzahl von 455 mg KOH/g. Eine 70 Gew.-% wässrige Lösung sah homogen und klar aus.

### l.3. Herstellung von erfindungsgemäß hergestelltem Produkt P3

Man legte 100,8 g (0,8 mol) Melamin, 880,6 g (10 mol) Ethylencarbonat und 0,8 g (6,4 mmol) Kaliumcarbonat in einem 5-l-Kolben vor und erhitzte unter Rühren innerhalb von 40 Minuten auf 130°C. Danach erhitzte man mit einer Aufheizgeschwindigkeit von 85°C/h auf 160°C. Die maximale Gasentwicklungsgeschwindigkeit betrug 4,5 l /min·kg Reaktionsmischung, und es wurde kein Schaum beobachtet. Die so erhaltene Reaktionsmischung wurde so lange bei 160°C gerührt, bis keine Gasentwicklung mehr zu beobachten war. Anschließend wurde auf Raumtemperatur abgekühlt. Man erhielt ein erfindungsgemäß hergestelltes Produkt P3 mit einer Hydroxylzahl von 452 mg KOH/g. Eine 70 Gew.-% wässrige Lösung sah homogen und klar aus.

### I.4. Herstellung von erfindungsgemäß hergestelltem Produkt P4

Man legte 42 g (0,5 mol) Dicyandiamid, 440 g (5 mol) Ethylencarbonat und 2,5 g (0,04 mol) Kaliumcarbonat in einem 5-I-Kolben vor und erhitzte unter Rühren innerhalb von 35 Minuten auf 130°C. Danach erhitzte man mit einer Aufheizgeschwindigkeit von 14°C/h auf 170°C. Die maximale Gasentwicklungsgeschwindigkeit betrug 1 l /min·kg Reaktionsmischung, und es wurde kein Schaum beobachtet. Die so erhaltene Reaktionsmischung wurde so lange bei 170°C gerührt, bis keine Gasentwicklung mehr zu beobachten war. Anschließend wurde auf Raumtemperatur abgekühlt. Man erhielt ein erfindungsgemäß hergestelltes Produkt P4 mit einer Hydroxylzahl von 400 mg KOH/g. Eine 70 Gew.-% wässrige Lösung sah homogen und klar aus.

### l.5. Herstellung von Vergleichsprodukt V-P5

Man legte 50,4 g (0,4 mol) Melamin, 440 g (5 mol) Ethylencarbonat und 0,4 g (3,2 mmol) Kaliumcarbonat in einem 5-I-Kolben vor und erhitzte unter Rühren innerhalb von 35 Minuten auf 130°C. Danach erhitzte man mit einer Aufheizgeschwindigkeit von 90°C/h auf 200°C. Die maximale Gasentwicklungsgeschwindigkeit betrug 8,8 l /min·kg Reaktionsmischung, und es wurde starke Bildung eines Schaums beobachtet. Die so erhaltene Reaktionsmischung wurde so lange bei 200°C gerührt, bis keine Gasentwicklung mehr zu beobachten war. Anschließend wurde auf Raumtemperatur abgekühlt. Man erhielt Vergleichsprodukt V-P5. Das Reaktionsgefäß und seine Peripherie, insbesondere die Leitungen, waren in erheblichem Maß verschmutzt.

Die erfindungsgemäß hergestellten Produkte P1 bis P4 ließen sich sehr gut als Gerbmittel verwenden. Vergleichsprodukt V-P5 ließ sich nicht gut als Gerbmittel verwenden.

## Patentansprüche

1. Verfahren zur Herstellung von Produkten, erhältlich durch Umsetzung von
(A) mindestens einem cyclischen organischen Carbonat mit
(B) mindestens einer Verbindung mit mindestens zwei nucleophilen Gruppen pro
Molekül, gewählt aus Sulfonsäure-, Hydroxyl-, Mercapto- und primären oder sekundären Aminogruppen,
in Gegenwart einer Base, gewählt aus basischen Erdalkali- oder Alkalimetallsalzen oder aus Amin,
bei Reaktionstemperaturen im Bereich von 150 bis 220 °C, **dadurch gekennzeichnet, dass** man zunächst auf eine Temperatur im Bereich von 100 bis 145°C aufheizt
und danach mit einer Aufheizgeschwindigkeit im Bereich von 1 bis 85°C/Stunde auf die Reaktionstemperatur aufheizt.

2. Verfahren nach Anspruch 1, **dadurch gekennzeichnet, dass** man cyclisches organisches Carbonat (A) wählt aus Verbindungen der allgemeinen Formel I 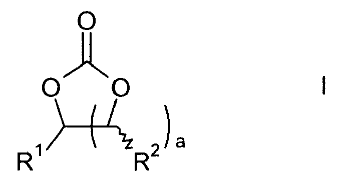 wobei die Variablen wie folgt definiert sind:
R¹ gewählt aus Wasserstoff und C₁-C₄-Alkyl, linear oder verzweigt,
R² gleich oder verschieden und unabhängig voneinander gewählt aus Was- serstoff und C₁-C₄-Alkyl, linear oder verzweigt,
a eine ganze Zahl im Bereich von 1 bis 3.

3. Verfahren nach Anspruch 1 oder 2, **dadurch gekennzeichnet, dass** man Verbindungen (B) wählt aus
(B1) Harnstoff,
(B2) heterocyclischen Verbindungen mit mindestens zwei NH₂-Gruppen pro Molekül,
(B3) Dicyandiamid,
(B4) Guanidin,
(B5) 4,4'-Dihydroxydiphenylsulfon,
(B6) Bisphenol A,
(B7) 4-Hydroxyphenylsulfonsäure,
(B8) Amidosulfonsäure.

4. Verfahren nach einem der Ansprüche 1 bis 3, **dadurch gekennzeichnet, dass** man cyclisches organisches Carbonat (A) mit Verbindung (B) in einem Molverhältnis im Bereich von 2 : 1 bis 100 : 1 umsetzt.

5. Verfahren nach einem der Ansprüche 1 bis 4, **dadurch gekennzeichnet, dass** man cyclisches organisches Carbonat (A) in einer oder mehr Portionen dosiert.

6. Verfahren nach einem der Ansprüche 1 bis 5, **dadurch gekennzeichnet, dass** man es in einem Reaktionsgefäß durchführt, das eine oder mehrere Einbauten aufweist, die zur Entschäumung dienen.

7. Verfahren nach einem der Ansprüche 1 bis 6, **dadurch gekennzeichnet, dass** man es in Gegenwart von einem oder mehreren Entschäumungsmitteln durchführt.

## Claims

1. A process for the production of products, obtainable by reacting
(A) at least one cyclic organic carbonate with
(B) at least one compound having at least two
nucleophilic groups per molecule, selected from sulfo, hydroxyl, mercapto and primary or secondary amino groups,
in the presence of a base, selected from basic alkaline earth metal or alkali metal salts or from amine,
at reaction temperatures in the range from 150 to 220°C, wherein heating to a temperature in the range from 100 to 145°C is first effected
and thereafter heating to the reaction temperature at a heating rate in the range from 1 to 85°C/hour is effected.

2. The process according to claim 1, wherein cyclic organic carbonate (A) is selected from compounds of the general formula I 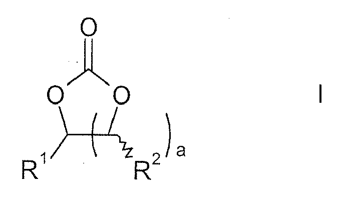 where the variables are defined as follows:
R¹ is selected from hydrogen and C₁-C₄-alkyl, linear
R² or branched, are identical or different and, independently of one another, are selected from hydrogen and C₁-C₄- alkyl, linear or branched,
a is an integer in the range from 1 to 3.

3. The process according to claim 1 or 2, wherein compounds (B) are selected from
(B1) urea,
(B2) heterocyclic compounds having at least two NH₂ groups per molecule,
(B3) dicyandiamide,
(B4) guanidine,
(B5) 4,4'-dihydroxydiphenyl sulfone,
(B6) bisphenol A,
(B7) 4-hydroxyphenylsulfonic acid,
(B8) amidosulfonic acid.

4. The process according to any of claims 1 to 3, wherein cyclic organic carbonate (A) is reacted with compound (B) in a molar ratio in the range from 2:1 to 100:1.

5. The process according to any of claims 1 to 4, wherein cyclic organic carbonate (A) is metered in one or more portions.

6. The process according to any of claims 1 to 5, which is carried out in a reaction vessel which has one or more internals which serve for defoaming.

7. The process according to any of claims 1 to 6, which is carried out in the presence of one or more antifoams.

## Revendications

1. Procédé pour la préparation de produits, pouvant être obtenus par transformation
(A) d'au moins un carbonate organique cyclique avec
(B) au moins un composé comprenant au moins deux
groupes nucléophiles par molécule, choisis parmi les groupes acide sulfonique, hydroxyle, mercapto et amino primaire ou secondaire,
en présence d'une base choisie parmi les sels basiques de métal alcalin ou alcalino-terreux ou une amine,
à des températures de réaction dans la plage de 150 à 220°C, **caractérisé en ce qu'**on chauffe d'abord à une température dans la plage de 100 à 145°C,
puis on chauffe à une vitesse de chauffage dans la plage de 1 à 85°C/heure à la température de réaction.

2. Procédé selon la revendication 1, **caractérisé en ce qu'**on choisit le carbonate organique cyclique (A) parmi les composés de formule générale I 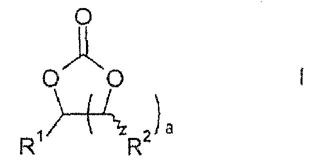 les variables étant définies comme suit :
R¹ est choisi parmi hydrogène et C₁-C₄-alkyle, linéaire ou ramifié, les radicaux R² sont identiques ou différents et choisis indépendamment l'un de l'autre parmi hydrogène et C₁-C₄-alkyle, linéaire ou ramifié
a représente un nombre entier de la plage de 1 à 3.

3. Procédé selon la revendication 1 ou 2, **caractérisé en ce qu'**on choisit les composés (B) parmi
(B1) l'urée
(B2) les composés hétérocycliques présentant au moins
deux groupes NH₂ par molécule,
(B3) le dicyanodiamide,
(B4) la guanidine,
(B5) la 4,4'-dihydroxydiphénylsulfone,
(B6) le bisphénol A,
(B7) l'acide 4-hydroxyphénylsulfonique,
(B8) l'acide amidosulfonique.

4. Procédé selon l'une quelconque des revendications 1 à 3, **caractérisé en ce qu'**on transforme le carbonate organique cyclique (A) avec le composé (B) dans un rapport molaire situé dans la plage de 2:1 à 100:1.

5. Procédé selon l'une quelconque des revendications 1 à 4, **caractérisé en ce qu'**on dose le carbonate organique cyclique (A) en une ou plusieurs portions.

6. Procédé selon l'une quelconque des revendications 1 à 5, **caractérisé en ce qu'**on le réalise dans un récipient de réaction qui présente un ou plusieurs inserts qui servent à l'élimination de la mousse.

7. Procédé selon l'une quelconque des revendications 1 à 6, **caractérisé en ce qu'**on le réalise en présence d'un ou de plusieurs agents antimousse.
